# EUROPEAN PATENT APPLICATION

(11) **EP 2 279 903 A2**
(43) Date of publication of application: **02.02.2011**
(21) Application number: 10170507.7
(22) Date of filing: 22.07.2010
(51) Int. Cl.: B60N 2/38, B60N 2/06, B60R 21/015

(54) **Mesh seat for ride-on power equipment**

(30) Priority: 31.07.2009 US 533863
(71) Applicant: Briggs and Stratton Corporation, Wauwatosa, Wisconsin 53222 (US)
(72) Inventor: Ryczek, Steve, Wauwatosa, WI 53222 (US); Karry, Kim, Wauwatosa, WI 53222 (US); Acevedo, Herman, Wauwatosa, WI 53222 (US); Lydy, Bruce, Wauwatosa, 53222 (US)
(74) Representative: Lawrence, John

(57) **Abstract**

Embodiments of the invention provide a mesh seat (10) for use with a piece of ride-on power equipment. The mesh seat includes a lower frame (18) and a bottom mesh (20) coupled to the lower frame forming a bottom hammock surface for the rider. The mesh seat includes an upper frame (24) and a back mesh (26) coupled to the upper frame forming a back hammock surface for the rider. The mesh seat includes a safety interlock (82; 182) coupled to the lower frame and positioned under the bottom mesh in order to be engaged by the lower torso of the rider. The mesh seat (10) includes a base (40) adapted to be coupled to the piece of ride-on power equipment, and the lower frame (18) is coupled to the base (40).

## Description

### BACKGROUND

Ride-on power equipment, such as lawn tractors and golf carts, typically include an upholstered seat. The upholstery includes cushioning, padding, or insulation covered with a water-resistant material or coating. During warm weather conditions, the insulated, weather-resistant material can be uncomfortable to sit on for extended periods of time.

### SUMMARY

Embodiments of the invention provide a mesh seat for use with a piece of ride-on power equipment. The mesh seat includes a lower frame and a bottom mesh coupled to the lower frame forming a bottom hammock surface for the rider's lower torso. The mesh seat includes an upper frame and a back mesh coupled to the upper frame forming a back hammock surface for the rider's upper torso. The mesh seat includes a safety interlock coupled to the lower frame and positioned under the bottom mesh in order to be engaged by the lower torso of the rider. The mesh seat includes a base adapted to be coupled to the piece of ride-on power equipment, and the lower frame is coupled to the base.

### DESCRIPTION OF THE DRAWINGS

FIG. 1 is a perspective view of a mesh seat for a piece of ride-on power equipment according to one embodiment of the invention.

FIG. 2 is a back view of the mesh seat of FIG. 1 including a base according to one embodiment of the invention.

FIG. 3 is a perspective view of the base of FIG. 2 coupled to a piece of ride-on power equipment.

FIG. 4 is a bottom perspective view of the mesh seat of FIGS. 1 and 2 without the base.

FIG. 5 is a detailed perspective view of a portion of the mesh seat of FIG. 4.

FIG. 6 is a front perspective view of the mesh seat of FIGS. 1-5 with the mesh removed.

FIGS. 7A and 7B are perspective views of a safety interlock of the mesh seat of FIGS. 1-6.

FIG. 8A is a perspective view of the safety interlock according to another embodiment of the invention.

FIG. 8B is side view of the safety interlock of FIG. 8A.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

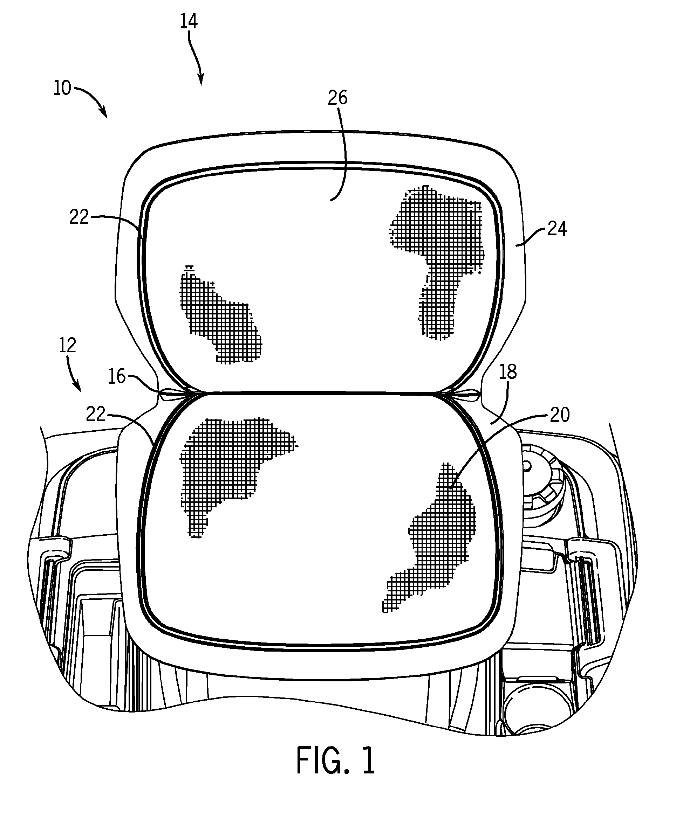

FIG. 1 illustrates a mesh seat 10 for use with a piece of ride-on power equipment, such as a lawn tractor, according to one embodiment of the invention. The mesh seat 10 can include a lower seat portion 12 and a back portion 14. In some embodiments, a gap 16 is provided between the lower seat portion 12 and the back portion 14. The lower seat portion 12 can include a lower frame 18 and a bottom mesh 20 that form a bottom hammock surface for supporting the lower torso of the rider. The bottom hammock surface can be free of any cushioning, padding, or insulation. The bottom mesh 20 can be substantially cellular so that air can ventilate through the bottom mesh 20 to the rider's lower torso. In some embodiments, the bottom mesh 20 can be woven. The bottom mesh 20 can be coupled to the lower frame 18 using a bonding strip 22. The bonding strip 22 can be elastic and/or flexible. In some embodiments, the bonding strip 22 can hold the bottom mesh 20 under tension.

The back portion 14 can provide a back rest for the rider. The back portion 14 can include an upper frame 24 and a back mesh 26 that form a back hammock surface for supporting the upper torso of the rider. The back hammock surface can be free of any cushioning, padding, or insulation. The back mesh 26 can be cellular so that air can ventilate through the back mesh to the rider's upper torso. In some embodiments, the back mesh 26 can be woven. In some embodiments, the back mesh 26 can be substantially similar or identical to the bottom mesh 20. The back mesh 26 can be coupled to the upper frame 24 using the bonding strip 22. In some embodiments, the bonding strip 22 can hold the back mesh 26 under tension. In some embodiments, the bonding strip 22 can be coupled to either or both of the bottom mesh 20 and the back mesh 26. The bonding strip 22 can secure the bottom mesh 20 and/or the back mesh 26 to the lower frame 18 and/or upper frame 24, respectively.

In some embodiments, the lower frame 18 and/or the upper frame 24 can be constructed from one or more of nylon, polypropylene, polyethylene terephthalate, or other structural resins. The lower frame 18 and/or the upper frame 24 can be reinforced with glass fibers and/or other suitable reinforcement materials. In some embodiments, the bottom mesh 20 and/or the back mesh 26 can include a load-bearing fabric, such as polyester elastomer fabrics. In some embodiments, the load-bearing fabric can be pre-manufactured and can be readily available, e.g., the Dymetrol fabric from Acme Mills of Detroit, MI; the Pellicle fabric from Quantum Inc. of Colfax, NC; the Collage fabric from Matrix of Greensboro, NC; or the Flexnet fabric from Milliken of Spartanburg, SC. In some embodiments, the bonding strip 22 can be manufactured from Hytrel 4556 or 5556 available from Dupont, Arnitel EM 440 available from Dutch State Mine (DSM) of Evansville, IN, or other thermoplastic elastomers. In other embodiments, the bonding strip 22 can be manufactured from the polyolefin family of resins or from other families of resins having adequate elongation properties. In some embodiments, the bonding strip 22 can be made from a polypropylene co-polymer, such as J/68 available from DSM, or other materials allowing an elongation of about 3 percent to about 8 percent.

In some embodiments, the bottom mesh 20 and/or the back mesh 26 can be at least somewhat elastic. The bottom mesh 20 and/or the back mesh 26 can be at least partly extended before being coupled to the lower frame 18 and/or the upper frame 24, respectfully. As a result, the bottom mesh 20 and/or the back mesh 26 can be under tension. The bonding strip 22 can keep the bottom mesh 20 and/or the back mesh 26 under tension, even if an additional load, such as the rider, further extends the bottom mesh 20 and/or the back mesh 26. In some embodiments, the tension can be adjusted to provide a desired comfort level for the rider. In some embodiments, the mesh seat 10 can act as a shock damper as the piece of ride-on power equipment moves over uneven terrain. The bottom mesh 20 and/or the back mesh 26 can be extended below an elastic deformation limit in order to compensate for load variances.

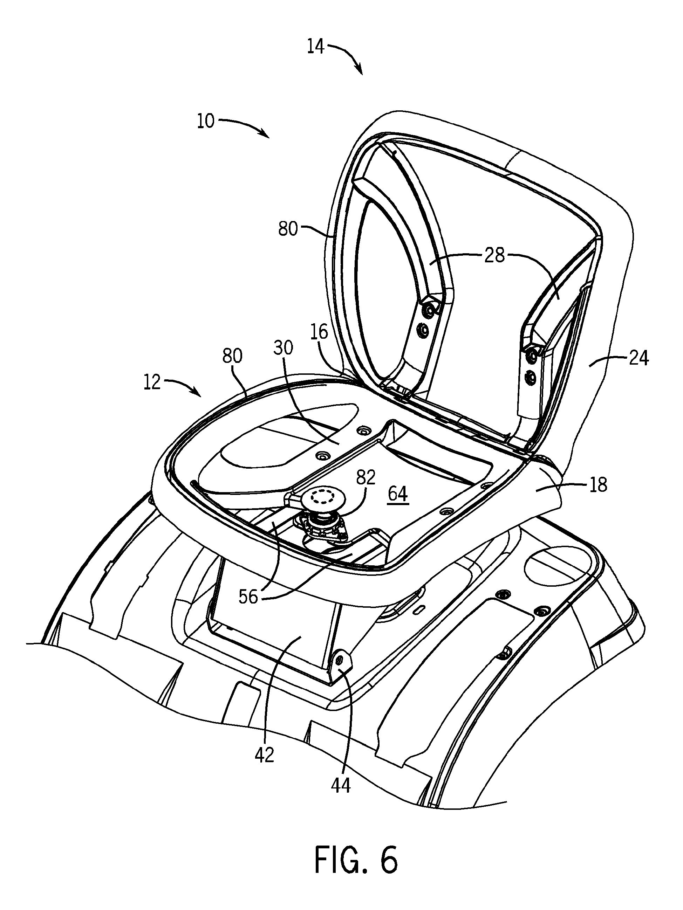

The mesh seat 10 can be coupled to a piece of ride-on power equipment, as shown in FIG. 6. The lower seat portion 12 and/or the back portion 14 can be ergonomically shaped. In some embodiments, lateral sides of the lower frame 18 and the upper frame 24 can be contoured to provide stability to the rider during movements and/or changes of direction of the ride-on power equipment.

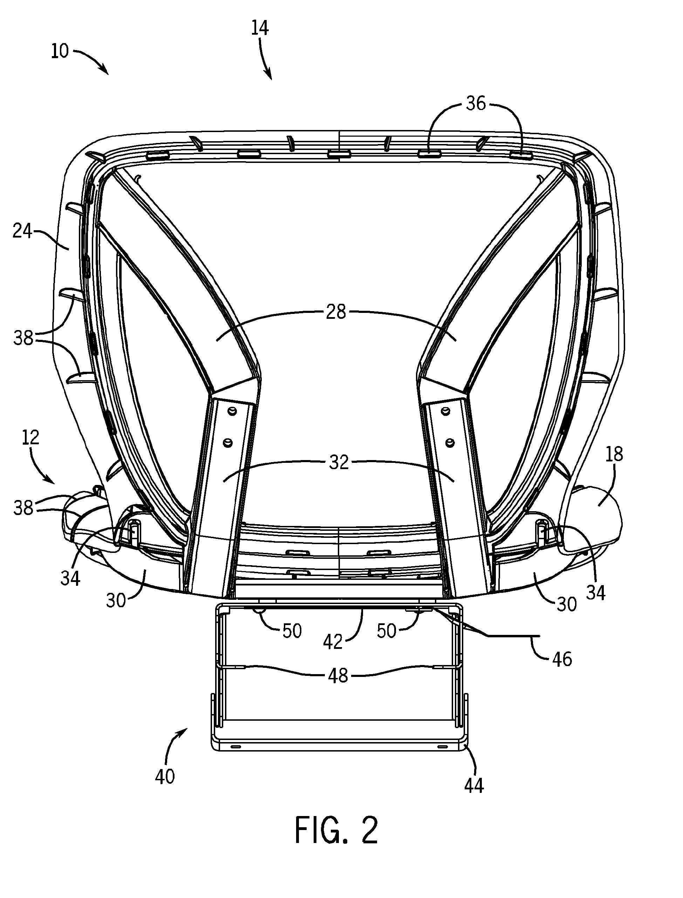

FIG. 2 illustrates a back view of the mesh seat 10 according to one embodiment of the invention. The mesh seat 10 can include one or more upper support members 28, one or more lower support members 30, and one more bars 32. The upper support members 28 can be used to couple the back portion 14 to the lower seat portion 12. In some embodiments, the bars 32 can couple the upper support members 28 to the lower support members 30. The bars 32 can enable pivotal movement of the back portion 14 with respect to the lower seat portion 12. In some embodiments, the bars 32 can act as biasing members to allow elastic deformations. In some embodiments, the bars 32 can be constructed of metal.

As shown in FIG. 2, in some embodiments, the upper frame 24 of the mesh seat 10 can include a plurality of apertures 36 and a plurality of ribs 38. The apertures 36 and the ribs 38 can be evenly positioned around the perimeter of the upper frame 24. The apertures 36 can be used to increase ventilation through the mesh seat 10 and/or to reduce the weight and/or material of the mesh seat 10. In some embodiments, at least a portion of the bonding strip 22 can be received by one or more of the apertures 36. The ribs 38 can provide stiffness to the upper frame 24 in order to help prevent warping of the back portion 14 of the mesh seat 10. In some embodiments, the lower frame 18 of the lower seat portion 12 can also include the apertures 36 and the ribs 38.

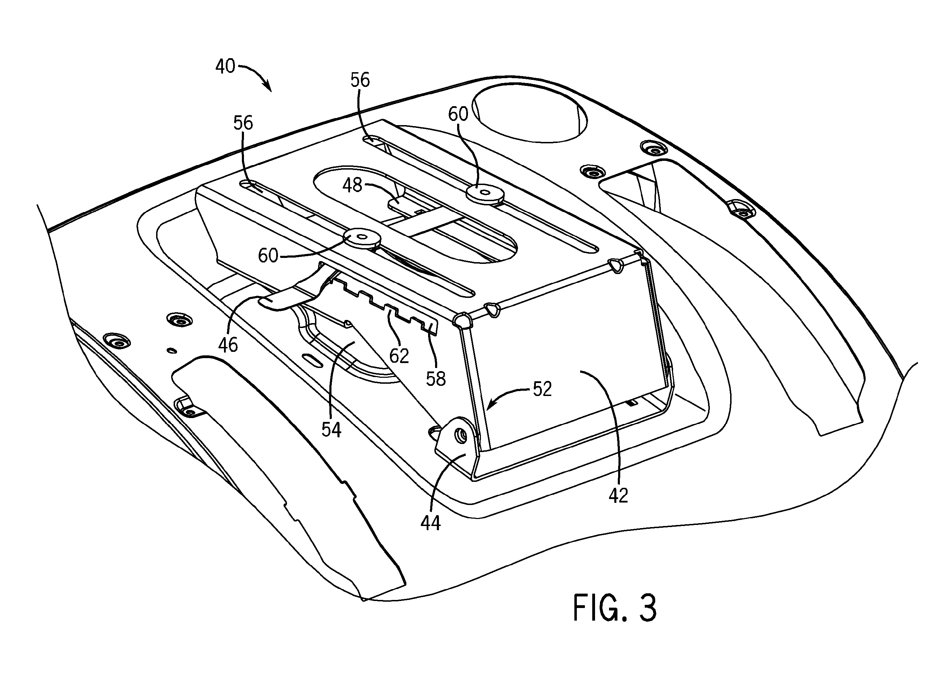

As shown in FIGS. 2 and 3, the mesh seat 10 can include a base 40 to couple the lower seat portion 12 to the piece of ride-on power equipment. The base 40 can include a mounting panel 42, a bracket 44, and a handle 46. The mounting panel 42 can include one or more projections 48. In some embodiments, the mounting panel 42 can be rotatable with respect to the bracket 44. The projections 48 can engage a portion of the piece of ride-on power equipment to limit the rotational movement of the mounting panel 42. One or more fasteners 50 can be used to couple the handle 46 to the mesh seat 10. The fasteners 50 can also be used to couple the lower seat portion 12 to the base 40. In some embodiments, the lower seat portion 12 can be moveable with respect to the base 40, and the handle 46 can be used to move and then fix a desired position of the lower seat portion 12 relative to the base 40.

FIG. 3 illustrates the base 40 according to one embodiment of the invention. The base 40 can include the mounting panel 42, the bracket 44, the handle 46, and the projections 48. The mounting panel 42 and the bracket 44 can form a hinge 52. The mounting panel 42 can be rotated forward with the hinge 52 to provide access to a compartment 54 of a piece of the ride-on power equipment. A compartment 54 can be used to store accessories, tools, and/or a battery for the piece of ride-on power equipment.

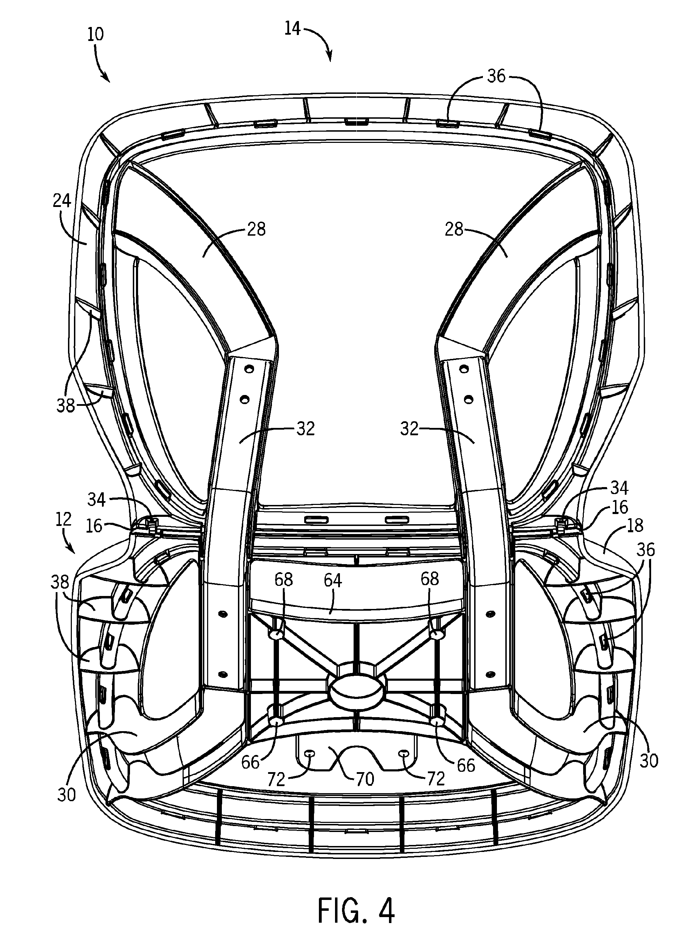

In some embodiments, the mounting panel 42 can include one or more elongated apertures 56, a contoured slot 58, and one or more washers 60. The contoured slot 58 can include a raster 62. The washers 60 can be used to couple the handle 46 to the mounting panel 42 in such a way that the handle 46 can slide along the elongated apertures 56. The washers 60 can be coupled to the lower frame 18 using the fasteners 50, as shown and described with respect to FIG. 4. The handle 46 can be engaged with the raster 62 when in a locked position for a desired position of the lower seat portion 12. The handle 46 can be lifted by the rider to disengage from the raster 62 in order to allow the mesh seat 10 to slide backward or forward with respect to the base 40. When the rider releases the handle 46, the handle 46 can be biased downward to again engage the raster 62 for a locked position for a new desired position of the lower seat portion 12. The raster 62 can provide several locked positions for the lower seat portion 12 with respect to the base 40 to provide positions for riders having different heights.

FIG. 4 illustrates the bottom of the mesh seat 10 according to one embodiment of the invention. The lower seat portion 12 can include the apertures 36 to receive the bonding strip 22. The lower seat portion 12 can also include a cross member 64. The cross member 64 can be coupled to the lower support members 30. In some embodiments, the cross member 64 can include one or more front bores 66, one or more back bores 68, and a projection 70 with one or more mounting holes 72. The fasteners 50 can engage the front bores 66 and/or the back bores 68 in order to couple the lower seat portion 12 to the base 40. In some embodiments, the fasteners 50 can also couple the handle 46 and/or the washer 60 to the front bore 66, while the back bores 68 can be used to provide lateral stability during the sliding movement of the lower seat portion 12 along the elongated apertures 56.

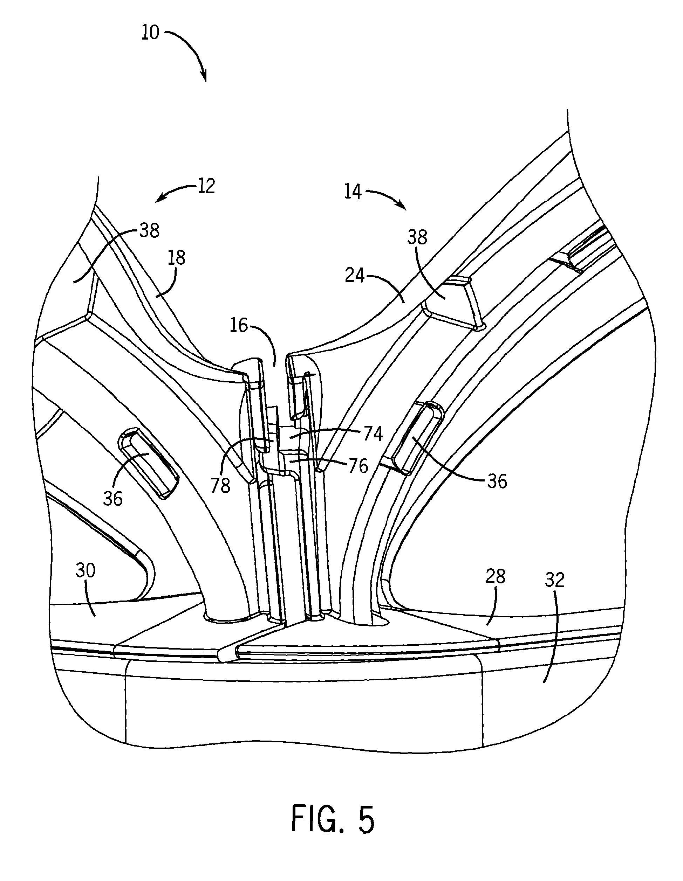

FIG. 5 is a detailed view of the mesh seat 10 illustrating an area near the gap 16. The lower frame 18 of the lower seat portion 14 can include one or more slots 34 (as also shown in FIGS. 2 and 4). As shown in FIG. 5, the upper frame 24 can include an extension 74 with a first portion 76 and a second portion 78. The extension 74 can contact the lower frame 18 in order to act as a stop to limit forward movement of the back portion 14 with respect to the lower seat portion 12. The extension 74 can substantially span the gap 16 and can pass through the slots 34, with the first portion 76 passing through the slots 34. The first portion 76 can off-set the second portion 78 in relation to a thickness of the lower frame 18, so that the second portion 78 can reach into a void of the lower frame 18. In some embodiments, the upper frame 24 can contact the lower frame 18 to stop forward movement of the back portion 14, and the second portion 74 can contact the lower frame 18 in order to stop rearward movement of the back portion 14. In some embodiments, a length of the first portion 76 can be adjusted for a desired range of motion of the back portion 14.

FIG. 6 illustrates the mesh seat 10 according to one embodiment with the bottom mesh 20 and the back mesh 26 removed to view the lower frame 18 and the upper frame 24. The lower frame 18 and/or the upper frame 24 can include a groove 80. The groove 80 can receive the bonding strip 22 in order to couple the bottom mesh 20 and/or the back mesh 26 to the lower frame 18 and/or upper frame 24. In some embodiments, a perimeter of the bonding strip 22 can be substantially smaller than a perimeter of the groove 80, so that the bonding strip 22 is stretched in order to fit into the groove 80. In some embodiments, the stretching of the bonding strip 22 can result in a stretching of the bottom mesh 20 and/or the back mesh 26. In some embodiments, the bonding strip 22 can include locking tabs (not shown), which can fit into the apertures 36. In some embodiments, the bottom mesh 20 and/or the back mesh 26 can be coupled to the lower frame 18 and/or upper frame 24 as described in U.S. Patent No. 7,159,293 issued to T. Coffield, the entire contents of which is herein incorporated by reference.

As shown in FIGS. 6-7B, the mesh seat 10 can include a safety interlock 82. The safety interlock 82 can be coupled to the lower seat portion 12. The safety interlock 82 can be positioned below the bottom mesh 20. In some embodiments, the safety interlock 82 can be coupled to the projection 70 on the cross member 64 (as shown in FIG. 4). The safety interlock 82 can be positioned in close proximity to the bottom mesh 20, so that the safety interlock 82 is engaged when the rider sits down on the mesh seat 10. The safety interlock 82 can be used to prevent the piece of ride-on power equipment from starting without the rider being present. The safety interlock 82 can also interrupt operation of the piece of ride-on power equipment if the rider stands up or falls off the lower seat portion 12. In some embodiments, if the lower seat portion 12 is mounted to a lawn tractor, the safety interlock 82 can prevent or stop the blades of the lawn tractor from rotating.

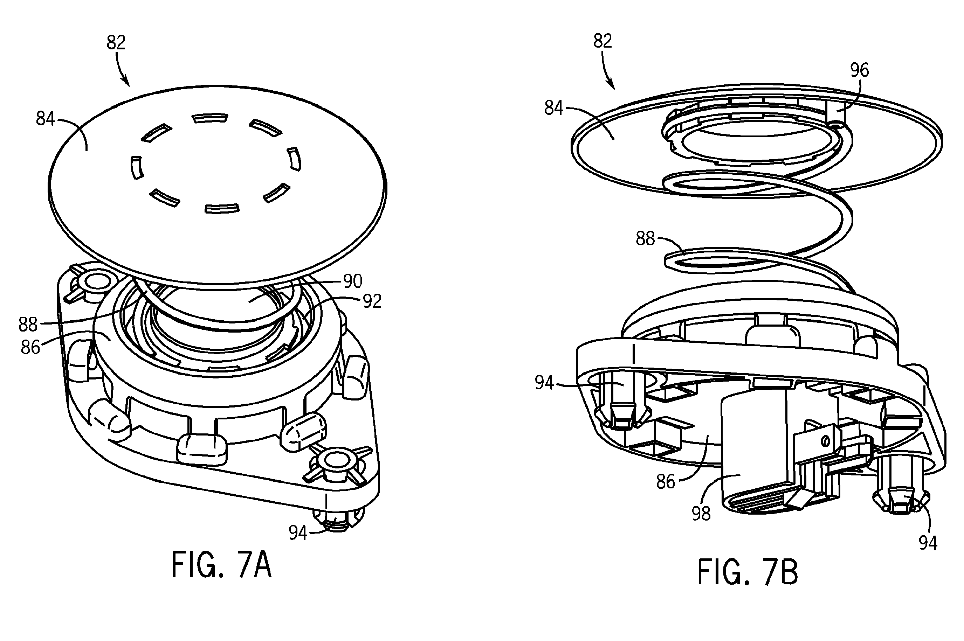

FIGS. 7A and 7B illustrate the safety interlock 82 according to one embodiment of the invention. As shown in FIG. 7A, the safety interlock 82 can include a disc 84, a stand 86, a spring 88, and an actuation surface 90. The spring 88 can couple the disc 84 to the stand 86. The stand 86 can include a channel 92 to receive the spring 88. In some embodiments, the channel 92 can receive substantially the entire spring 88 when the spring 88 is compressed, enabling the disc 84 to contact the actuation surface 90. In some embodiments, the spring 88 and/or the channel 92 can surround the actuation surface 90. One or more connectors 94 can be used to couple the safety interlock 82 to the lower seat portion 12 or the base 40. In some embodiments, the connectors 94 can be coupled to the mounting holes 72 of the projection of the cross member 64 (as shown in FIG. 4). In one embodiment, the connector 94 and the mounting holes 72 can form a snap-on quick connection.

As shown in FIG. 7B, the disc 84 can include a protrusion 96. The protrusion 96 can engage the stand 86 to limit travel of the disc 84. The bottom mesh 20 can engage the disc 84. The rider can deform the bottom mesh 20 and can move the disc 84 toward the actuation surface 90. The stiffness of the spring 88 can determine the force (i.e., the weight of the rider) necessary for the disc 84 to engage the actuation surface 90. The protrusion 96 can prevent further travel of the disc 84 once the disc 84 has contacted the actuation surface 90. The protrusion 96 can be strong enough to sustain substantially higher loads than the load necessary to engage the actuation surface 90. In some embodiments, the safety interlock 82 can be positioned on the lower seat portion 12 without interfering with the comfort of the rider.

As shown in FIG. 7B, the actuation surface 90 can be used to activate a switch 98. The switch 98 can connect to an electrical system of the piece of ride-on power equipment. When the rider is not present, the spring 88 can bias the disc 84 away from the actuation surface 90 to disengage the switch 98. In some embodiments, the disc 84 can be three-dimensionally shaped to help prevent or reduce damage to the bottom mesh 20. In one embodiment, the disc 84 can form a rounded, convex surface (i.e., by taking a cross section through part of a sphere).

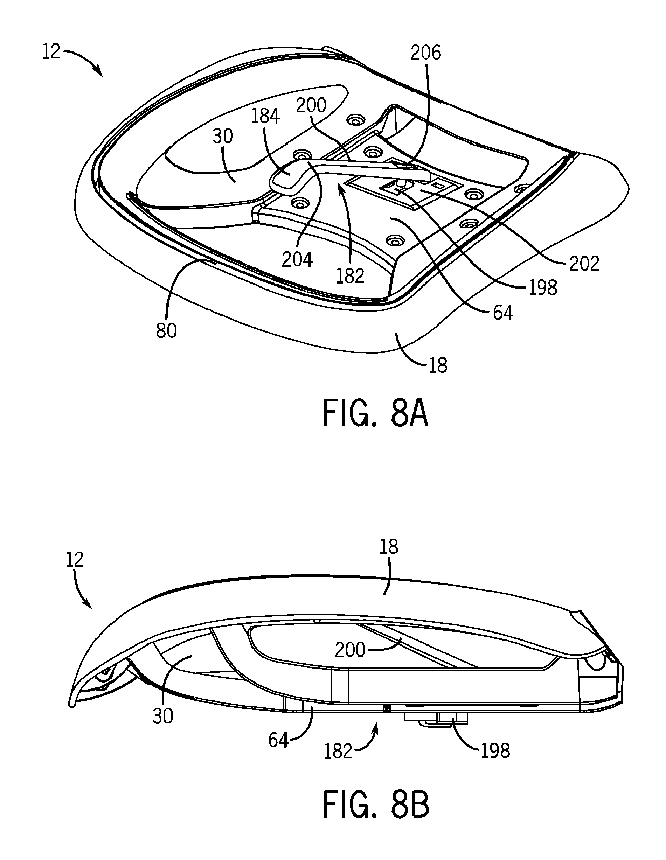

FIGS. 8A and 8B illustrate an alternative embodiment of a safety interlock 182. The safety interlock 182 can include a flange 184, a switch 198, a lever 200, and a plate 202. The flange 184 can be coupled to a first end 204 of the lever 200. In some embodiments, the first end 204 can be integrally formed with the flange 184. A transition from the lever 200 to the flange 184 can be substantially smooth. The safety interlock 182 can be positioned below the bottom mesh 20. The lever 200 can be long enough to allow the flange 184 to come into contact with the bottom mesh 20. In some embodiments, the flange 184 can be rounded to prevent damage to the bottom mesh 20.

In some embodiments, a second end 206 of the lever 200 can be coupled to the plate 202. The plate 202 can be coupled to the cross member 64. In some embodiments, the plate 202 can snap into an aperture of the cross member 64. The plate 202 can house the switch 198. The switch 198 can be positioned adjacent to the second end 206. In some embodiments, the switch 198 can be positioned substantially below the lever 200.

In some embodiments, the lever 200 can rotate with respect to the plate 202 resulting in the lever 200 operating the switch 198. Before being engaged by the rider's lower torso, the lever 200 can be positioned at an angle (e.g., between about 20 degrees and about 60 degrees) with respect to the cross member 64 and/or the base. In some embodiments, the rider's lower torso can deform the bottom mesh 20 and pivot the lever 200 in a substantially downward direction, which can engage the switch 198. The switch 198 can signal the rider's presence on the ride-on power equipment. Without the rider's presence, the lever 200 can rotate in a substantially upward direction to disengage the switch 198.

In some embodiments, the mesh seat 10 can be substantially water-resistant. The mesh seat 10 can be designed to withstand rain and other water spray. The mesh seat 10 can generally withstand direct water exposure from pressure washers. For example, if the piece of ride-on power equipment is being cleaned, the mesh seat 10 can be easily hosed off. In some embodiments, the mesh seat 10 can be exposed to extreme temperatures, such as cold conditions during storage over winter and hot conditions during operation in the summer, without resulting in cracking and/or other signs of material fatigue over prolonged periods of time. In some embodiments, the bottom mesh 20 and/or the back mesh 26 can be substantially weather-resistant being capable of withstanding environmental influences over prolonged time periods.

In some embodiments, the mesh seat 10 can have alternative shapes and designs. For example, the mesh seat 10 can be a bench and can be mounted to a golf cart. In some embodiments, the mesh seat 10 can include accessories, such as arm rests, back supports, lumbar supports, etc.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. A mesh seat for use with a piece of ride-on power equipment, the mesh seat being capable of supporting a rider having an upper torso and a lower torso, the mesh seat comprising:
a lower frame and a bottom mesh coupled to the lower frame forming a bottom hammock surface for the rider, the bottom hammock surface only including the bottom mesh to support the lower torso of the rider;
an upper frame and a back mesh coupled to the upper frame forming a back hammock surface for the rider, the back hammock surface only including the back mesh to support the upper torso of the rider, the upper frame coupled to the lower frame;
a safety interlock coupled to the lower frame and positioned under the bottom mesh in order to be engaged by the lower torso of the rider, the safety interlock being capable of disengaging an operation of the piece of ride-on power equipment; and
a base adapted to be coupled to the piece of ride-on power equipment, the lower frame coupled to the base.

2. The mesh seat of Claim 1, wherein the bottom mesh and the back mesh are woven.

3. The mesh seat of Claim 1 or Claim 2, wherein the bottom mesh and the back mesh are weather resistant.

4. The mesh seat of Claim 1 or Claim 2 or Claim 3, wherein the bottom hammock surface and the back hammock surface are free of any one of cushioning, padding, and insulation.

5. The mesh seat of Claim 1 or any of Claims 2 to 4, wherein the bottom mesh and the back mesh allow air to ventilate to the lower torso and the upper torso of the rider.

6. The mesh seat of Claim 1 or any of Claims 2 to 5, and further comprising a lower support member and an upper support member.

7. The mesh seat of Claim 6, wherein the lower support member is coupled to the upper support member by a bar.

8. The mesh seat of Claim 6 or Claim 7, wherein at least one of the lower support member and the upper support member enables movement of the upper frame with respect to the lower frame.

9. The mesh seat of Claim 1 or any of Claims 2 to 8, and further comprising a gap between the lower frame and the upper frame.

10. The mesh seat of Claim 1 or any of Claims 2 to 9, and further comprising a cross member coupling the lower frame to the base.

11. The mesh seat of Claim 1 or any of Claims 2 to 10, wherein the safety interlock includes a three-dimensional disc, and wherein the three-dimensional disc is positioned under the bottom mesh.

12. The mesh seat of Claim 1 or any of Claims 2 to 11, wherein the safety interlock includes a lever with an integral flange positioned under the bottom mesh; and wherein the lever is positioned at an angle of between about 20 degrees and about 60 degrees with respect to the base.

13. The mesh set of Claim 1 or any of Claims 2 to 12, wherein the piece of ride-on power equipment is a lawn tractor, and wherein the safety interlock disengages a mowing operation of the lawn tractor.

14. The mesh seat of Claim 1 or any of Claims 2 to 13, wherein the bottom mesh and the back mesh are coupled to the lower frame and the upper frame by at least one bonding strip.

15. The mesh seat of Claim 14, wherein the at least one bonding strip holds the bottom mesh and the back mesh in tension.

16. The mesh seat of Claim 14 or Claim 15, wherein the at least one bonding strip is constructed of polyolefin resin.

17. The mesh seat of Claim 1 or any of Claims 2 to 16, wherein the lower frame and the upper frame are constructed of at least one of nylon, polypropylene, and polyethylene terephthalate.

18. The mesh seat of Claim 17, wherein lower frame and the upper frame are reinforced with glass fibers.

19. The mesh seat of Claim 1 or any of Claims 2 to 18, wherein the bottom mesh and the back mesh are constructed of load-bearing, polyester elastomer fabric.

20. The mesh seat of Claim 1 or any of Claims 2 to 19, wherein the upper frame and the lower frame each include a plurality of ribs to help prevent warping.

21. The mesh seat of Claim 1 or any of Claims 2 to 20, wherein the base includes at least one elongated aperture along which the lower frame can slide forward and backward.
